# EUROPÄISCHE PATENTSCHRIFT

(11) **EP 0 808 106 B1**
(45) Veröffentlichungstag und Bekanntmachung des Hinweises auf die Patenterteilung: **16.09.1998**
(21) Anmeldenummer: 96901633.6
(22) Anmeldetag: 08.02.1996
(51) Int. Cl.: A21C 9/08, B65G 49/08

(54) **VORRICHTUNG ZUM AUTOMATISCHEN TRANSPORT VON FLÄCHIGEN TEIGSTÜCKTRÄGERN**
DEVICE FOR THE AUTOMATED CONVEYANCE OF FLAT DOUGH PORTION CARRIERS
DISPOSITIF DE TRANSPORT AUTOMATIQUE DE PORTEURS PLANS POUR MORCEAUX DE PATE

(30) Priorität: 08.02.1995 AT 233/95
(43) Veröffentlichungstag der Anmeldung: 26.11.1997
(73) Patentinhaber: König, Helmut, A-8045 Graz (AT)
(72) Erfinder: König, Helmut, A-8045 Graz (AT)
(74) Vertreter: Wildhack, Helmut, Dr. Dipl.-Ing.
(86) Internationale Anmeldenummer: AT9600021
(87) Internationale Veröffentlichungsnummer: WO9624252

(56) Entgegenhaltungen:
- DE-A- 2 846 006
- DE-A- 3 815 440
- DE-U- 9 005 769
- DE-U- 9 010 030
- FR-A- 2 539 003
- FR-A- 2 579 072

## Beschreibung

Die Erfindung bezieht sich auf eine Vorrichtung zum automatischen Transport von flächigen Teigstückträgern, z.B. Backblechen oder Gärblättern, zwischen einer Belegungsanlage und einem Backwagen, und zum automatischen Stapeln belegter Teigstückträger im Backwagen, mit einem Gestell, in welchem zumindest ein Greifer mittels eines vom Geste vertikal geführten Wagens auf die Höhenlagen der im Backwagen gestapelten Teigstückträger verfahrbar und in jeder dieser Höhenlagen auf den Backwagen zu, zwecks Ergreifung eines Teigstückträgers und vom Backwagen weg zwecks Verlagerung dieses Teigstückträgers auf eine zusammen mit dem Greifer höhenverlagerbare, greiferlose Auflage bewegbar ist, und wobei der Wagen auch eine Transporteinrichtung trägt, die den Teigstückträger vom Backwagen zur Belegungsanlage bzw. umgekehrt transportiert.

Die herkömmliche händische Bedienung eines Backwagens an einer solchen Anlage ist wie folgt: die Teigstücke, welche sich z.B. in Gehängen befinden, werden auf eine Abziehvorrichtung abgekippt, welche die Teigstücke durch Abziehen auf den Teigstückträger abwirft, wobei der Teigstückträger manuell betätigt wird. Der Teigstückträger kann ein Backblech sein, auf das die fertig gegarten Teigstücke abgelegt werden, oder ein Gärbrett. An der Anlage wird ein mit leeren Teigstückträgern gefüllter Backwagen bereitgestellt. Diesem entnimmt die Bedienungsperson den ersten Teigstückträger und legt diesen in die Anlage ein. Nach der Belegung dieses Teigstückträgers wird dieser in seine ursprüngliche Position im Backwagen zurückgelegt und der nächste Teigstückträger, in der Regel der darüber im Backwagen liegende Teigstücktrager, dem Backwagen entnommen usw. Die erforderliche Manipulationsgeschwindigkeit der Bedienungsperson wird indirekt durch die Leistung der Anlage bestimmt, welche in der Folge die Zykluszeit des Wechsels der Teigstückträger bestimmt.

Zur Automatisierung dieses Vorganges wurde bereits eine Vorrichtung entwickelt (DE-PS 3 538 250), bei welcher der händische Bewegungsablauf durch einen Schwenkarm-Roboter im wesentlichen exakt nachvollzogen wird. Hiebei werden als Auflage für den Teigstückträger dienende Gabelarme des Schwenkarmes unter den betreffenden Teigstückträger geschoben, dieser mittels einer Zange fixiert und durch den Schwenkarm aus dem Backwagen herausgezogen und sodann in die Belegungsanlage eingebracht. Nach Belegung des Teigstückträgers erfolgt sein Rücktransport in den Backwagen in analoger Weise. Nachteilig hieran ist, daß die unter den Teigstückträger in den Backwagen einzuschiebenden Gabelarme die nutzbare Höhe jedes Abteiles im Backwagen verringern.

Eine weitere, aus der Praxis bekannte Konstruktion vermeidet diesen Nachteil dadurch, daß der Schwenkarm den mittels der Zange umfaßten Teigstückträger zunächst aus dem Backwagen heraus auf eine mittels des Wagens am Geste höhenverstellbare Auflage zieht und von dieser sodann auf eine weitere, im Bereich der Belegungsanlage angeordnete Auflage schiebt. Nachteilig hieran ist, daß durch die erforderliche Schwenkbewegung des Backbleches eine Reibbewegung zwischen der starren Auflage und dem Teigstückträger erfolgt, und daß weiters in bzw. an der Belegungsanlage eine hinsichtlich ihrer Höhenlage exakt mit der anderen Auflage korrespondierende starre Gegenauflage angesteuert werden muß, um die Tragfunktion für den Teigstückträger zu gewährleisten. Dasselbe gilt für die Bewegung des belegten Teigstückträgers in umgekehrter Richtung zurück zum Backwagen. Bei einer weiteren bekannten Konstruktion (DE-U-9010030) ist zur Umsetzung von Backblechen aus einer Bearbeitungsvorrichtung in ein Stapelgestell eine Transporteinrichtung vorgesehen, die an einer Seite höhenbeweglich getragen ist und wahlweise auf verschiedene Höhe einstellbar ist. Die Transporteinrichtung besitzt zwei horizontal bewegliche Greifeinrichtungen für die Backbleche, deren Bewegungsbahnen sich kreuzen. Die Verwendung zweier Greifeinrichtungen, deren jede einen Antrieb erfordert, macht die Vorrichtung kompliziert.

Allen beschriebenen Vorrichtungen ist der Nachteil gemeinsam, daß sie relativ viel Platz in jener Richtung erfordern, welche normal steht auf die Richtung, in welcher der Teigstückträger aus dem Backwagen herausgezogen wird, da zu der in dieser Richtung gemessenen Länge des Teigstückträgers noch die gesamte Gestellbreite hinzukommt.

Die Erfindung setzt sich zur Aufgabe, diese Nachteile zu vermeiden und die Bewegung des Teigstückträgers relativ zur Auflage auf ein Minimum zu beschränken und auch den Platzbedarf für die Übergabevorrichtung zur Seite der Belegungsanlage gering zu halten. Die Erfindung löst diese Aufgabe dadurch, daß die greiferlose Auflage von der Transporteinrichtung getragen ist und mittels einer vom Wagen getragenen Führung in Richtung zur Belegungsanlage linear verschiebbar geführt ist und daß für diese hin- und hergehende Verschiebebewegung der Auflage zumindest ein die Auflage tragender mehrstufiger Auszug vorgesehen ist, dessen einzelne Stufen durch einen gemeinsamen Antrieb relativ zueinander verschiebbar sind. Anstelle der bei den eingangs erwähnten bekannten Vorrichtung vorhandenen Schwenkbewegung des Teigstückträgers tritt somit eine rein lineare Bewegung desselben, und zwar einerseits eine lineare Bewegung beim Herausziehen des Teigstückträgers aus dem Backwagen bzw. beim Hineinschieben des Teigstückträgers in den Backwagen, welche Bewegung im wesentlichen gleich ist der entsprechenden Bewegung bei der bekannten Vorrichtung. Im Gegensatz zu jener erfolgt jedoch die Bewegung des Teigstückträgers auf die Belegungsanlage zu bzw. von dieser weg bei der erfindungsgemäßen Vorrichtung ebenfalls linear, wobei die Mehrstufigkeit des Auszuges gewährleistet, daß der notwendige Verschiebeweg in Richtung zur Belegungsanlage zu bzw. von dieser weg problemlos bewältigt werden kann, ohne daß die von dem Auszug gebildete Transporteinrichtung in der eingefahrenen Stellung Abmessungen aufweist, die unzulässig groß werden. Die Vorrichtung benötigt daher nur wenig Platz in jener Richtung, in welcher der Teigstückträger von der Belegungsanlage abgezogen bzw. in diese Anlage eingelegt wird. Außerdem ermöglicht es die Mehrstufigkeit des Auszuges, die Bewegung der den Teigstückträger tragenden Auflage relativ schnell zu gestalten, so daß auch geringen Taktzeiten der Belegungsanlage problemlos gefolgt werden kann. Der Umstand, daR die Auflage greiferlos ist, vereinfacht die Vorrichtung im Vergleich zur zuletzt beschriebenen bekannten Vorrichtung wesentlich und reduziert auch die Abnützung an den Teigstückträgern, da jeder Greifer notwendigerweise auf Dauer den Teigstückträger abnützt.

Die Verwendung mehrstufiger teleskopartiger Auszüge ist an den Muffelseitenwänden von Backöfen bekannt (DE-A 3,815.440).

Eine besonders günstige Ausführungsform in der erfindungsgemäßen Vorrichtung, welche auch geringen Taktzeiten der Belegungsanlage folgen kann, besteht darin, daß an der am Wagen befestigten Führung ein erster Auszugsteil verschiebbar geführt ist, an dem ein zweiter Auszugsteil verschiebbar geführt ist, wobei die beiden Auszugsteile durch ein Getriebe zur Bewegung in gleicher Richtung, jedoch mit unterschiedlichen Geschwindigkeiten gekoppelt sind. Gemäß einer besonders einfachen Ausführungsform der Erfindung kann dieses Getriebe dadurch gebildet sein, daR der erste Auszugsteil ein um Umlenkrollen geführtes endloses Band trägt, dessen Untertrum an der Führung befestigt ist und dessen Obertrum am Auszugsteil befestigt ist.

Es ist zweckmäßig, die einzelnen Stufen des Auszuges mittels Teleskopschienen aneinander zu führen. da auf diese Weise handelsübliche Bauteile verwendet werden können.

Gemäß einer Weiterbildung der Erfindung ist die Anordnung so getroffen, daß der Wagen horizontale Schienen für die durch einen Antrieb bewirkte Hin- und Herbewegung eines den Greifer tragenden Schlittens trägt, welche Schienen normal zu der darunter am Wagen befestigten Führung für den Auszug verlaufen. Hiebei ist es besonders günstig, wenn der Wagen einen kastenartigen Rahmen hat, wobei die Schienen für den Schlitten und die Führung für den Auszug zumindest zum Großteil innerhalb des vom Rahmen begrenzten Hohlraumes angeordnet sind. Dies sichert, daß die Abmessungen der Vorrichtung nicht wesentlich größer sind als die Abmessungen des kastenartigen Rahmens bzw. des ihn führenden Gestelles, so daR am Platz im Bereiche des Backwagens bzw. der Belegungsanlage gespart wird, obwohl alle Transportvorgänge problemlos bewältigt werden.

Ein besonderer Vorteil der Erfindung besteht darin, daß sie ohne jedwede Schwierigkeit auch anwendbar ist auf zwei Backwägen, so daß die Belegungsanlage für die Zeit des Backwagenwechsels nicht stillgesetzt werden muß. Hiezu braucht lediglich gemäß einer Weiterbildung der Erfindung der Schlitten an zwei einander abgewandten Seiten mit je zumindest einem Greifer zur Bedienung zweier zu beiden Seiten des Gestelles stehender Backwagen versehen zu werden. Es bereitet steuerungstechnisch keinerlei Schwierigkeiten, den Schlitten so zu steuern, daß zunächst der eine Backwagen mittels der zur einen Seite des Schlittens liegenden Greife bearbeitet wird, worauf durch entsprechende Umsteuerung der Schlitten bzw. die auf seiner anderen Seite liegenden Greifer zur Bedienung des anderen Backwagens wirksam gemacht werden. Während der Bedienung des letzteren Backwagens kann der zuerst bediente Backwagen gewechselt werden, sodaß ein kontinuierlicher Betrieb der Belegungsanlage möglich ist.

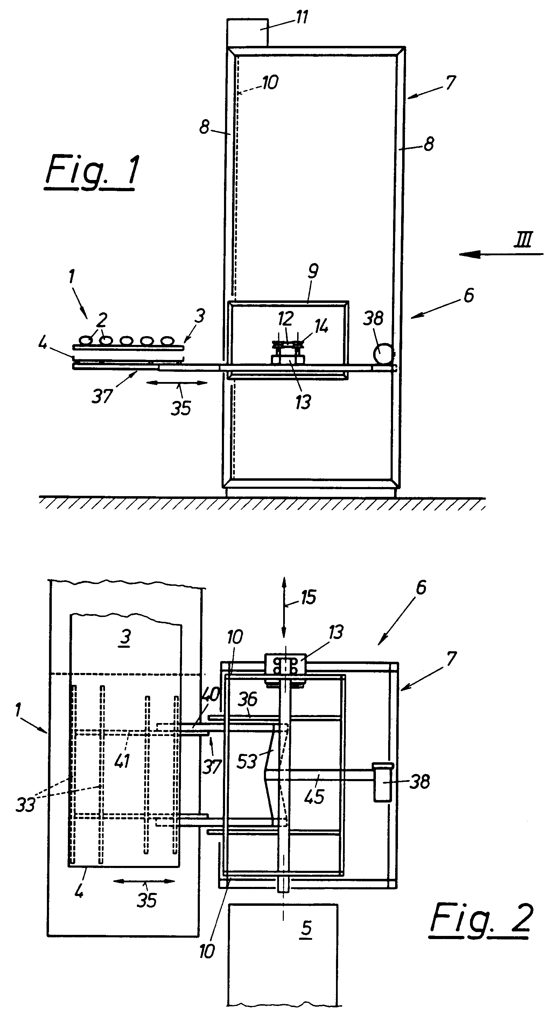

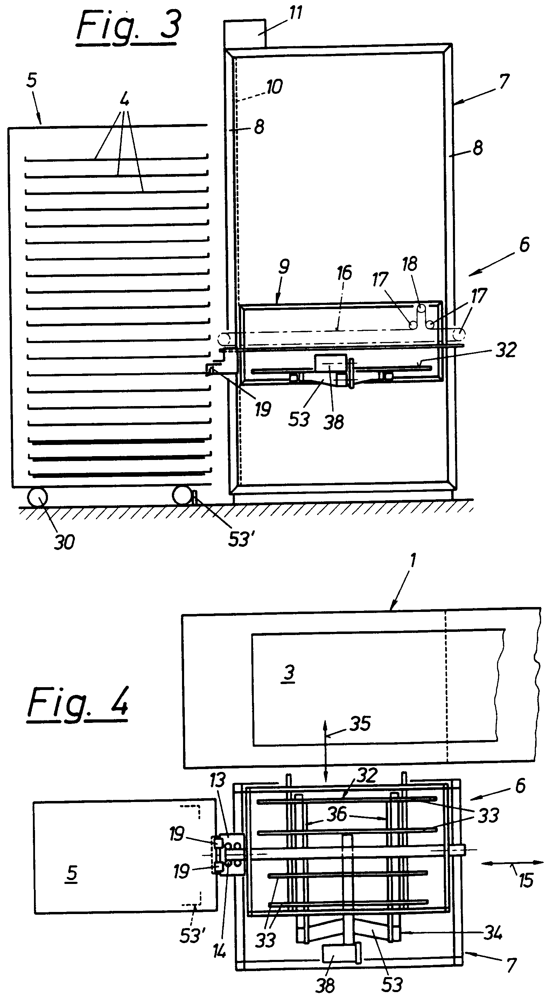

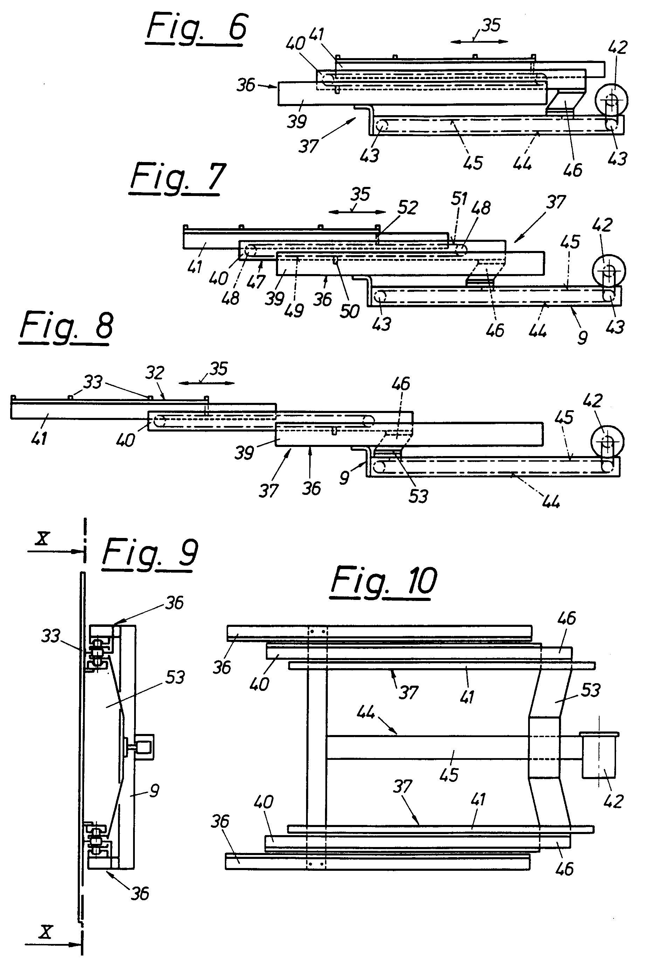

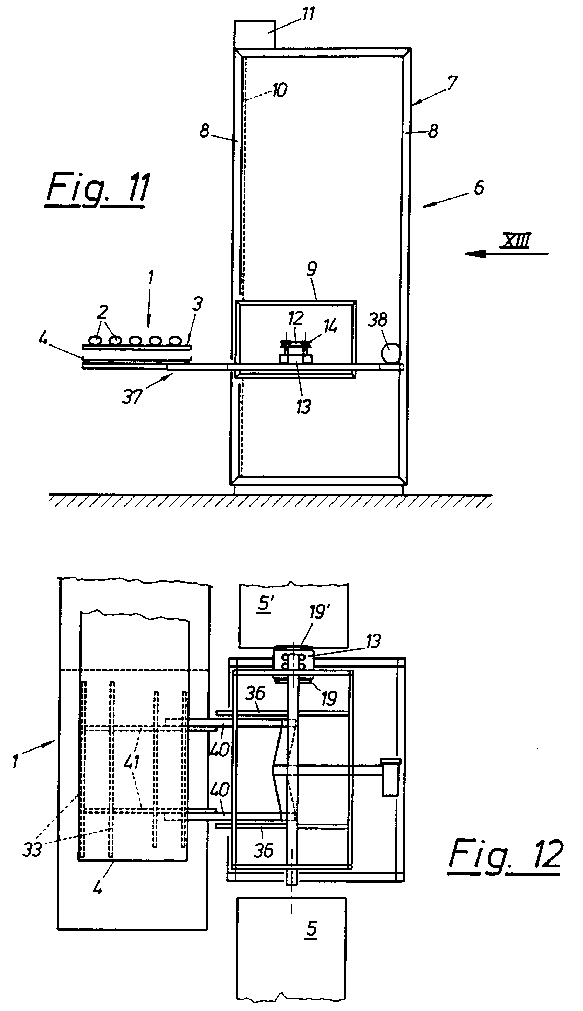

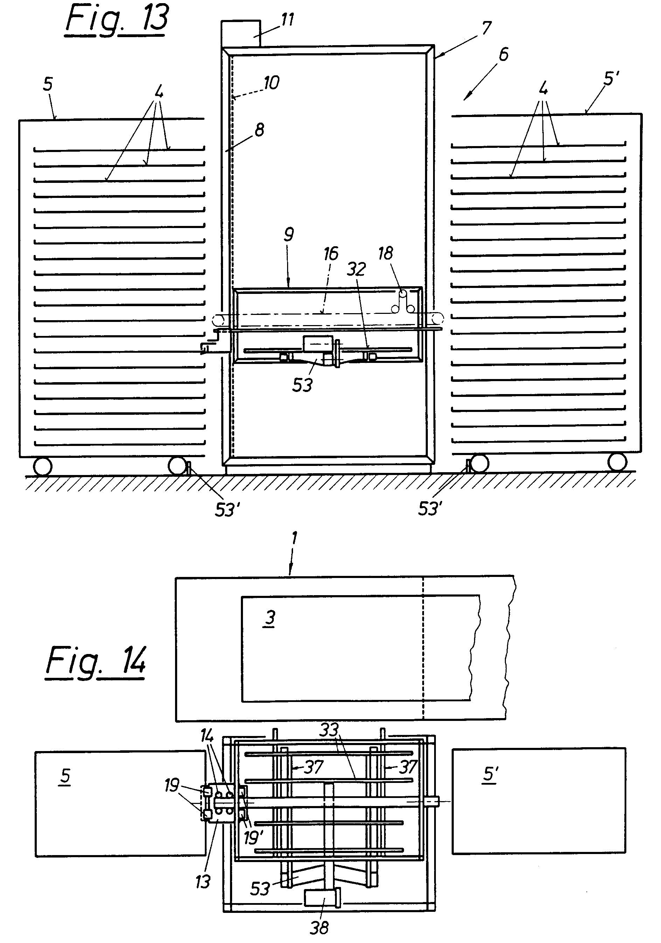

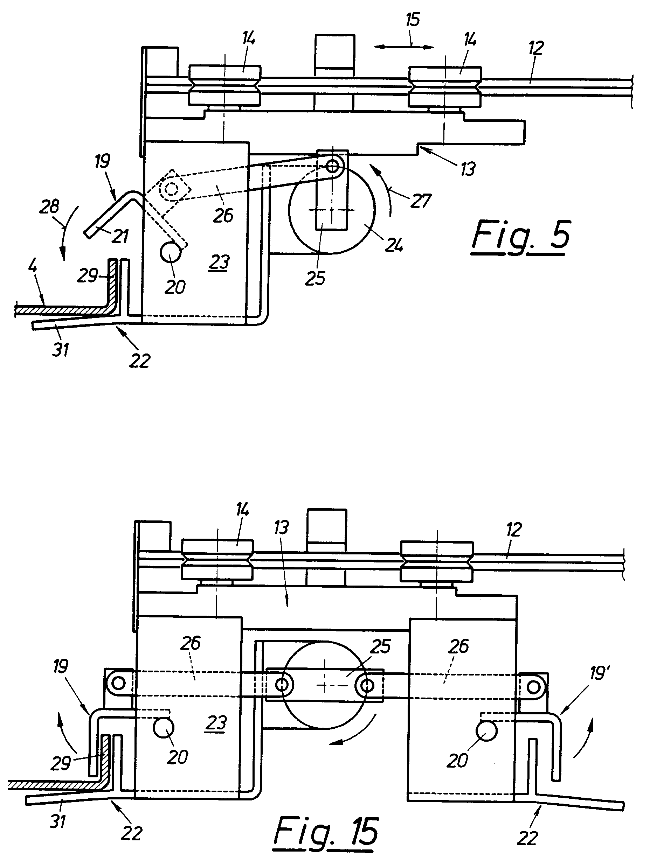

In der Zeichnung ist der Erfindungsgegenstand anhand von Ausführungsbeispielen schematisch dargestellt. Fig. 1 zeigt eine für die Bedienung eines Backwagens geeignete Vorrichtung in Seitenansicht, gesehen normal zur Bewegungsrichtung des Auszuges. Fig. 2 ist eine Draufsicht zu Fig. 1. Fig. 3 ist eine Seitenansicht gesehen in Richtung des Pfeiles III der Fig. 1. Fig. 4 ist eine Draufsicht zu Fig. 3, in einer gegenüber Fig. 2 veränderten Betriebsstellung des Auszuges und des Greifers. Fig. 5 zeigt die Ausbildung des Greifers und des ihn tragenden Schlittens im Detail. Die Fig. 6,7 und 8 zeigen den Auszug in Seitenansicht in drei unterschiedlichen Betriebsstellungen. Fig. 9 ist ein Querschnitt zu Fig. 6. Fig. 10 zeigt einen Schnitt nach der Linie X bis X der Fig. 9. Die Fig. 11 bis 14 zeigen in Ansichten analog zu den Fig. 1 bis 4 eine Ausführungsform zur Bedienung von zwei Backwagen. Fig. 15 zeigt die Ausbildung des Greifers bei einer Ausführungsform zur Bedienung zweier Backwagen.

Bei der Ausführungsform nach den Fig. 1 bis 10 ist eine Belegungsanlage 1 vorhanden, welche ungegarte, vorgegarte oder nachgegarte Teigstücke 2, z.B. aus Gehängen einer umlaufenden Gehängekette, auf eine Abzieheinrichtung 3 ablegt. Die Abzieheinrichtung 3 legt ihrerseits die auf ihr in mehreren Reihen abgelegten Teigstücke 2 auf einen Teigstückträger 4 ab, der z.B. ein Backblech oder ein Gärbrett sein kann. Dieser Teigstückträger 4 soll samt den auf ihm befindlichen Teigstücken 2 in einen Backwagen 5 gebracht werden und aus dem Backwagen 5 soll ein neuer Teigstückträger 4 anstelle des bisherigen Teigstückträgers 4 an der Belegungsanlage 1 an dieselbe Stelle unter die Abzieheinrichtung 3 gebracht werden. Hiezu dient eine automatisch arbeitende Vorrichtung 6, die nahe der Belegungsanlage 1 und nahe dem Backwagen 5, zweckmäßig ortsfest, angeordnet ist. Die Vorrichtung 6 hat ein Gestell 7, an dessen Stehern 8 ein Wagen 9 in vertikaler Richtung verfahrbar ist. Dies kann in beliebiger an sich bekannter Weise erfolgen, z.B. mittels eines Kettentriebes oder Zahnstangentriebes 10, der von einem Motor 11 betätigt wird. Mittels geeigneter, nicht gesondert dargestellter Führungen ist der Wagen 9 an dem Gestell 7 geführt, so daß der Wagen 9 leicht und schnell in vertikaler Richtung auf und ab bewegbar ist. Der kastenartig ausgebildete Wagen 9 trägt horizontale Schienen 12 (siehe auch Fig. 5), an denen ein Schlitten 13 mittels Rollen 14 in horizontaler Richtung im Sinne des Doppelpfeiles 15 hin- und herbewegbar ist, wofür der Schlitten 13 an einem Kettenzug 16 (Fig. 3) befestigt ist, der um Umlenkrollen 17 geführt und von einem Motor 18 betätigt ist. Der Schlitten 13 trägt zwei Greifer 19, deren jeder aus einem um eine Achse 20 schwenkbaren Winkelstück 21 besteht, das mit einem in Bezug auf den Schlitten 13 unbeweglichen Gegenstück 22 zusammenarbeitet. Die Achse 20 und das Gegenstück 22 sind an einer nach unten ragenden Verlängerung 23 des Schlittens 13 befestigt. Diese Verlängerung trägt auch einen Motor 24, auf dessen Achse ein Schwenkarm 25 befestigt ist, der mittels einer Lasche 26 mit dem Winkelstück 21 des Greifers 19 so gekuppelt ist, daß eine Verschwenkung des Schwenkarmes 25 in Richtung des Pfeiles 27 eine Abwärtsschwenkung des Winkelstückes 21 des Greifers 19 in Richtung des Pfeiles 28 bewirkt, so daß der nach oben ragende Rand 29 eines Teigstückträgers 4 zwischen dem Greifer 19 und dem Gegenstück 22 eingeklemmt werden kann. Durch eine Verschwenkung des Schwenkarmes 25 entgegen der Richtung des Pfeiles 27 kann hingegen dieser Rand 29 wieder freigegeben werden. Ist der Wagen 9 auf die entsprechende Höhe im Gestell 7 gebracht worden, so läßt sich mittels der Greifer 19 ein beliebiger Teigstückträger 4 im Backwagen 5 ergreifen und aus dem Backwagen durch entsprechende Verschiebung des Schlittens 13 in Richtung des Doppelpfeiles 15 heraus und in das Gestell 7 der Vorrichtung 6 hineinziehen. Hiezu ist das Gestell 7 so weiträumig, daß der Teigstückträger 4 in ihm genügend Platz findet und nicht über den von den Stehern 8 des Gestelles 7 begrenzten lichten Raum vorsteht. Um den jeweiligen Teigstückträger 4 sicher zu ergreifen und Verkantungen zu vermeiden, sind am Schlitten 13 zweckmäßig zwei Greifer 19 gleichachsig angeordnet, die synchron arbeiten (Fig.4). Umgekehrt läßt sich der jeweilige Teigstückträger 4 aus dem Gestell 7 durch entsprechende Verschiebung des Schlittens 13 in den Backwagen 5 hineinschieben. Dort gleitet der Teigstückträger 4 auf Führungsschienen 30 auf, die an den Seitenwänden des Wagens 5 hin angeordnet sind und von denen nur die untersten drei der besseren Übersichtlichkeit halber in Fig. 3 dargestellt sind. Um beim Zufahren des Schlittens 13 auf den betreffenden Teigstückträger 4 den Rand 29 desselben sicher zu unterfahren, ist das Gegenstück 22, wie Fig. 5 zeigt, mit einem geringfügig nach unten abgebogenen Schenke 31 versehen.

Beim Herausziehen des Teigstückträgers 4 aus dem Backwagen 5 gleitet der Teigstückträger 4 auf eine im Gestell 7 angeordnete, vom Wagen 9 getragene Auflage 32 (Fig. 3,4) auf. Diese Auflage 32 ist mit dem Wagen 9 hinsichtlich ihrer Höhenlage verfahrbar und besteht im dargestellten Ausführungsbeispiel aus vier parallel zueinander und parallel zur Bewegungsrichtung (Doppelpfeil 15) des Schlittens 13 verlaufenden Leisten 33, die voneinander in Abstand angeordnet sind, jedoch alle jeweils auf gleicher Höhe liegen. Diese Leisten 33 sind von einer Transporteinrichtung 34 getragen, mit welcher die Auflage 32 in Richtung des Doppelpfeiles 35 (Fig. 1,2,4) hin- und herbewegbar ist, um den jeweiligen Teigstückträger 4 von einer Lage innerhalb des Gestelles 7 in eine Lage unterhalb der Belegungsanlage 1 (Fig. 1) bringen zu können bzw. umgekehrt. Hiezu ist die von der Transporteinrichtung 34 getragene Auflage 32 mittels einer vom Wagen 9 getragenen Führung 36 in Richtung des Doppelpfeiles 35 geführt. Diese Führung 36 hat einen mehrstufigen Auszug 37, dessen einzelne Stufen durch einen gemeinsamen, von einem Motor gebildeten Antrieb 38 relativ zueinander verschiebbar sind. Hiezu hat die am Wagen 9 befestigte Führung 36 (Fig. 6 bis 10) Führungsschienen 39 für einen ersten Auszugsteil 40, der in den Führungsschienen 39 in Richtung des Doppelpfeiles 35 verschiebbar geführt ist. Der erste Auszugsteil 14 bildet seinerseits eine Führung für einen zweiten Auszugsteil 41, der ebenfalls in Richtung des Doppelpfeiles 35 relativ zum ersten Auszugsteile 40 verschiebbar ist. Zur Bewegung der Auszugsteile 40, 41 trägt der Wagen 9, auf welchem die Führung 36 starr befestigt ist, einen Motor 42, durch welches ein um Umlenkrollen 43 geführtes endloses Band 44 in wählbarer Umlaufrichtung angetrieben wird. Mit dem Obertrum 45 dieses Bandes 44 ist ein Mitnehmer 46 verbunden, dessen oberes Ende mit dem ersten Auszugsteil 40 verbunden ist. Eine Verschiebung des Obertrums 45 des Bandes 44 bewirkt daher eine Verschiebung des ersten Auszugsteiles 40 in gleicher Richtung und um dieselbe Strecke. Im ersten Auszugsteil 40 ist ein weiteres endloses Band 47 um Umlenkrollen 48 geführt. Das Untertrum 49 dieses Bandes 47 ist mittels eines Mitnehmers 50 mit der Führung 36 verbunden, das Obertrum 51 mittels eines Mitnehmers 52 mit dem zweiten Auszugsteil 41. Diese Kupplung ergibt, daß ein durch den Motor 42 bewirkte Umlauf des Bandes 44 zunächst eine Verschiebung des ersten Auszugsteiles 40 um dieselbe Strecke bewirkt, um welche sich das Obertrum 45 des Bandes 44 bewegt hat. Zugleich wird aber der zweite Auszugsteil 41 in der gleichen Richtung wie der erste Auszugsteil 40, jedoch um die doppelte Strecke verschoben. Auf diese Weise läßt sich der von den Auszugsteilen 40,41 und der Führung 36 gebildete mehrstufige Auszug 37 zwischen einer eingezogenen Stellung (Fig.6) und einer völlig ausgefahrenen Stellung (Fig.8) beliebig hin- und herbewegen. Fig. 7 zeigt eine Zwischenstellung. Zweckmäßig sind die Auszugsteile 40,41 und die Führung 36 teleskopschienenartig in- oder aneinander geführt (Fig.9). Der zweite Auszugsteil 41 trägt die Leisten 33 der Auflage 32, welche sich somit stets mit dem zweiten Auszugsteil 41 bewegt und daher einen Bestandteil der Transporteinrichtung 34 bildet, mit welcher der jeweilige Teigstückträger 4 zwischen der Belegungsanlage 1 und dem Gestell 7 der Vorrichtung 6 hin- und herbewegt wird. Um die Auflage 32 sicher tragen zu können, sind zweckmäßig zwei Gruppen von Führungen 36 und Auszugsteilen 40,41 nebeneinander, in Abstand voneinander angeordnet (Fig.9,10), die sich synchron bewegen. Hiezu sind die beiden Mitnehmer 46 der beiden Gruppen durch ein Joch 53 miteinander verbunden und an diesem Joch 53 greift das Obertrum 45 des Bandes 44 an.

Wie die Fig. 1 und 3 zeigen, liegt der Kettenzug 17 für den Schlitten 13 des Greifers 19 oberhalb der Bewegungsbahn des Auszuges 37 bzw. der Auflage 32, so daß diese Bauteile einander nicht behindem und der Greifer 19 den jeweiligen Teigstückträger 4 bequem und sicher aus dem Backwagen 5 auf die Auflage 32 ziehen bzw. von dieser in den Backwagen einschieben kann.

Die Wirkungsweise der Vorrichtung 6 ist wie folgt:

Zunächst wird ein Backwagen 5 an die Vorrichtung 6 herangeschoben und mittels einer Indexierung 53 (Fig.3,4) in seiner Lage relativ zur Vorrichtung 6 gesichert. Der Auszug 37 befindet sich zunächst in seiner eingefahrenen Stellung (Fig. 4,6). Der Motor 11 wird nun so angesteuert, daß der Wagen 9 in seiner unterste Stellung verfahren wird, in welcher der Greifer 19 auf der Höhe des untersten im Backwagen 5 befindlichen Teigstückträgers 4 liegt. Mittels des Motors 18 wird nun der Greifer 19 an diesen Teigstückträger 4 herangefahren und der Motor 24 für den Greifer 19 so betätigt, daß der Rand 29 des Teigstückträgers 4 sicher erfaßt wird. Durch entsprechende Ansteuerung des Motors 18 wird nun dieser Teigstückträger 4 aus dem Backwagen heraus und auf die Auflage 32 gezogen. Hiebei gelangt der Schlitten 13 des Greifers 19 in seine Grenzlage, in welcher er vom Backwagen 5 am weitesten entfernt ist (Fig.2). Sobald diese Stellung erreicht ist, wird der Greifermotor 24 so angesteuert, daß der Greifer 19 den Teigstückträger 4 freigibt. Der Teigstückträger 4 liegt nun frei auf der Auflage 32 auf, denn die Auflage 32 besitzt keinen Greifer und es ist auch sonst keine Haltevorrichtung erforderlich, die den Teigstückträger 4 auf der Auflage 32 fixiert. Sobald der Greifer 19 den Teigstückträger 4 freigegeben hat, wird der Motor 38 des Antriebes der Transporteinrichtung 34 so betätigt, daß der Auszug 37 von seiner eingezogenen Stellung (Fig.6) aus dem Gestell 7 in seine voll ausgefahrene Stellung (Fig.8) gelangt, in welcher die Auflage 32 samt dem auf ihr ruhenden Teigstückträger 4 unter die Abzieheinrichtung 3 der Belegungsanlage 1 gelangt (Fig.1). Sobald diese Stellung erreicht wird, kann der Teigstückträger 4 durch die Abzieheinrichtung 3 mit Teigstücken 2 belegt werden. Während dieses Belegungsvorganges stützt die Auflage 32 den Teigstückträger 4 weiter ab, der Teigstückträger 4 bewegt sich also relativ zur Auflage 32 nicht, bis die Transporteinrichtung 34 nach Beendigung des Belegungsvorganges den auf der Auflage 32 liegenden Teigstückträger 4 mittels des Auszuges 37 wieder in das Gestell 7 der Vorrichtung 6 zurückbewegt hat. Der Auszug 37 gelangt hiebei aus seiner voll ausgefahrenen Stellung (Fig.8) wieder zurück in seine eingefahrene Stellung (Fig.6), in welcher der Teigstückträger 4 völlig innerhalb des von den Stehern 8 des Gestelles 7 begrenzten Raumes liegt. Sobald der Teigstückträger 4 diese Lage erreicht hat, wird der Schlitten 13 an den Rand 29 des Teigstückträgers 4 herangefahren und durch Weiterbewegung des Schlittens 13 der Teigstückträger 4 in den Backwagen 5 in das freie Fach desselben auf die Führungsschienen 30 geschoben. Im Prinzip genügt es hiezu, wenn der Stirnrand des Greifers 19 am Rand 29 des Teigstückträgers 4 anliegt und diesen vor sich herschiebt. Es kann jedoch auch der Greifer 19 vor der Verschiebung des Schlittens so betätigt werden, daß der Rand 29 des Teigstückträgers 4 vor dessen Verschiebung zwischen dem Winkelstück 21 und dem Gegenstück 22 eingeklemmt wird, wie dies beim Herausziehen des Teigstückträgers 4 aus dem Backwagen 5 der Fall war. Sobald der belegte Teigstückträger 4 in sein Fach im Backwagen 5 zurückgebracht ist, wird der Wagen 9 um eine Etage mittels des Motors 11 angehoben, sodaß der Greifer 19 auf jenes Niveau gelangt, auf welchem der nächstfolgende Teigstückträger 4 im Backwagen 5 liegt. Der Zyklus kann nun neu beginnen.

Wie Fig. 4 zeigt, sind die beiden dem Antriebsmotor 38 benachbarten Leisten 33 kürzer als die beiden anderen Leisten 33 der Auflage 32. Dadurch wird erreicht, daß die Auflage 32 in die voll eingezogene Stellung des Auszuges 37 gebracht werden kann, ohne daß der den Greifer 19 tragende Schlitten 13 sehr weit aus dem Geste 7 der Vorrichtung 6 herausragen muß. Die Leisten 33 haben zweckmäßig ein hochkantstehendes Profil, um den Auflagedruck gut aufnehmen zu können. Quer wirkenden Kräften sind die Leisten 33 nicht ausgesetzt, da ja der Teigstückträger 4 keine Bewegung relativ zur Auflage 32 vollführt, welche Bewegung eine Richtungskomponente hat, die normal auf die Längsrichtung der Leisten 33 gerichtet ist.

Die beschriebenen Ansteuerungen der Antriebe für die einzelnen Bauteile lassen sich problemlos mittels geeigneter bekannter Steuersysteme durchführen und automatisieren. Es muß lediglich darauf geachtet werden, daß die für die Durchführung eines Zyklus der beschriebenen Vorgänge erforderliche Zeit kürzer ist als die Zeit, die für die Belegung der Abzieheinrichtung 3 durch die Belegungsanlage 1 bestimmt ist.

Nur für die Zeit, welche für den Wechsel eines Backwagens 5 erforderlich ist, muß die Belegungsanlage 1 bei der beschriebenen Ausführungsform nach den Fig.1 bis 10 stillgesetzt werden.

Um auch dies zu vermeiden, kann die Vorrichtung so ausgebildet werden, wie es das Ausführungsbeispiel nach den Fig. 11 bis 14 zeigt. Dort trägt der Schlitten 13 an zwei einander abgewendeten Seiten Greifer 19,19', zweckmäßig je zwei Greifer 19,19', wie dies bei der einseitigen Anordnung nach den Fig. 1 bis 10 der Fall war. Diese Greifer 19 dienen zur Bedienung zweier zu beiden Seiten des Gestelles 7 der Vorrichtung 6 stehender Backwagen 5, 5', die jeweils nacheinander bedient werden, so daß der eine Backwagen 5 bzw. 5' gewechselt werden kann, während der jeweils andere Backwagen 5' bzw. 5 bedient wird. Auf diese Weise ist ein kontinuierlicher Betrieb der Belegungsanlage 1 möglich.

## Patentansprüche

1. Vorrichtung zum automatischen Transport von flächigen Teigstückträgern (4), z.B. Backblechen oder Gärbrettern, zwischen einer Belegungsanlage (1) und einem Backwagen (5) und zum automatischen Stapeln belegter Teigstückträger (4) im Backwagen (5), mit einem Gestell (7), in welchem zumindest ein Greifer (19) mittels eines am Gestell (7) vertikal geführten Wagens (9) auf die Höhenlagen der im Backwagen (5) gestapelten Teigstückträger (4) verfahrbar und in jeder dieser Höhenlagen auf den Backwagen (5) zu, zwecks Ergreifung eines Teigstückträgers (4) und vom Backwagen (5) weg zwecks Verlagerung dieses Teigstückträgers (4) auf eine zusammen mit dem Greifer (19) höhenverlagerbare Auflage (32) bewegbar ist, und wobei der Wagen (9) auch eine Transporteinrichtung (34) trägt, die den Teigstückträger (4) vom Backwagen (5) zur Belegungsanlage (1) bzw, umgekehrt transportiert, dadurch gekennzeichnet, daß die greiferlose Auflage (32) von der Transporteinrichtung (34) getragen ist und mittels einer vom Wagen (9) getragenen Führung (36) in Richtung zur Belegungsanlage (1) linear verschiebbar geführt ist und daß für diese hin- und hergehende Verschiebebewegung der Auflage (32) zumindest ein die Auflage (32) tragender mehrstufiger Auszug (37) vorgesehen ist, dessen einzelne Stufen durch einen gemeinsamen Antrieb (38) relativ zueinander verschiebbar sind.

2. Vorrichtung nach Anspruch 1, dadurch gekennzeichnet, daß an der am Wagen (9) befestigten Führung (36) ein erster Auszugsteil (40) verschiebbar geführt ist, an dem ein zweiter Auszugsteil (41) verschiebbar geführt ist, und daß die beiden Auszugsteile (40,41) durch ein Getriebe zur Bewegung in gleicher Richtung, jedoch mit unterschiedlicher Geschwindigkeit, gekuppelt sind.

3. Vorrichtung nach Anspruch 2, dadurch gekennzeichnet, daß der erste Auszugsteil (40) ein um Umlenkrollen (48) geführtes endloses Band (47) trägt, dessen Untertrum (49) an der Führung (36) befestigt ist und dessen Obertrum (51) am zweiten Auszugsteil (41) befestigt ist.

4. Vorrichtung nach Anspruch 3, dadurch gekennzeichnet, daß die einzelnen Stufen des Auszuges (37) mittels Teleskopschienen aneinander geführt sind.

5. Vorrichtung nach einem der Ansprüche 1 bis 4, dadurch gekennzeichnet, daß der Wagen (9) horizontale Schienen (12) für die durch einen Motor (18) bewirkte Hin- und Herbewegung eines den Greifer (19) tragenden Schlittens (13) trägt, welche Schienen (12) normal zu der darunter am Wagen (9) befestigten Führung (36) für den Auszug (37) verlaufen.

6. Vorrichtung nach Anspruch 5, dadurch gekennzeichnet, daß der Wagen (9) einen kastenartigen Rahmen hat und daß die Schienen (12) für den Schlitten (13) und die Führung (36) für den Auszug (37) zumindest zum Großteil innerhalb des vom Rahmen begrenzten Hohlraumes angeordnet sind.

7. Vorrichtung nach Anspruch 5 oder 6, dadurch gekennzeichnet, daß der Motor (18) für den Antrieb des Schlittens (13) einen Seil- oder Kettenzug (16) treibt.

8. Vorrichtung nach einem der Ansprüche 5 bis 7, dadurch gekennzeichnet, daß der Schlitten (13) an den Schienen (12) hängend geführt ist.

9. Vorrichtung nach einem der Ansprüche 5 bis 8, dadurch gekennzeichnet, daß der Schlitten (13) an zwei einander abgewendeten Seiten je zumindest einen Greifer (19, 19') zur Bedienung zweier zu beiden Seiten des Gestelles (7) stehender Backwagen (5,5') trägt.

10. Vorrichtung nach einem der Ansprüche 1 bis 9, dadurch gekennzeichnet, daß die Auflage (32) von, vorzugsweise parallel zueinander und zur Bewegungsrichtung des Greifers (19) verlaufenden, hochkantstehenden Leisten (33) gebildet ist, die voneinander in Abstand liegen und im eingezogenen Zustand des Auszuges (37) innerhalb des Gestelles (7) angeordnet sind.

11. Vorrichtung nach Anspruch 10, dadurch gekennzeichnet, daß jene Leisten (33), die an der der Belegungsanlage (1) abgewandten Seite der Auflage (32) angeordnet sind, kürzer sind als die an der anderen Seite der Auflage (32) liegenden Leisten (33).

12. Vorrichtung nach einem der Ansprüche 1 bis 11, dadurch gekennzeichnet, daß die Auflage (32) von zwei in Abstand voneinander angeordneten Auszügen (37) getragen ist, die über ein sie verbindendes Joch (53) vom Antrieb (38) gemeinsam betätigt sind.

## Claims

1. Apparatus for the automatic transport of flat dough portion carriers (4), e.g. baking tins or fermentation boards, between a lay-down device (1) and a baking carriage (5) and for the automatic piling-up in the baking carriage (5) carriers (4) onto which dough portions are put, comprising a framework (7) in which at least one gripper (19) can be moved by means of a carriage (9) vertically guided on the framework (7) to the levels of the dough portion carriers (4) piled up in the baking carriage (5) and can be moved in each one of these levels towards the baking carriage (5) for gripping a dough portion carrier (4) and away from the baking carriage (5) for displacement of this dough portion carrier (4) onto a support (32) that can be displaced in its level together with the gripper (19), and wherein the carriage (9) carries also a transport device (34) for the transport of the dough portion carrier (4) from the baking carriage (5) to the lay-down device (1) or vice versa, characterized in that the support (32) that has no gripper is carried by the transport device (34) and is guided for linear shifting in direction towards the lay-down device (1) by means of a guide means (36) carried by the carriage (9) and that for this reciprocating shifting movement of the support (32) at least one multi-stage drawer (37) carrying the support (32) is provided, the several stages thereof can be shifted relative to each other by a common drive means (38).

2. Apparatus according to claim 1, characterized in that a first drawer member (40) is shiftably guided on the guide means (36) fixed to the carriage (9), on which drawer member a second drawer member (41) is shiftably guided, and that the two drawer members (40, 41) are coupled for movement in the same direction, however with different speed, by a gear means.

3. Apparatus according to claim 2, characterized in that the first drawer member (40) carries an endless band (47) guided over deflection rollers (48), the lower part (49) of which band is fixed to the guide means (36) and the upper part (51) thereof is fixed to the second drawer member (41).

4. Apparatus according to claim 3, characterized in that the several stages of the drawer (37) are guided on each other by means of telescopic rails.

5. Apparatus according to any of claims 1 to 4, characterized in that the carriage (9) carries horizontal rails (12) for a slide (13) carrying the gripper (19) and reciprocably movable by a motor (18), which rails (12) extend perpendicularly to the guide means (36) for the drawer (37), which guide means are fixed to the carriage (9) below the rails.

6. Apparatus according to claim 5, characterized in that the carriage (9) has a box-like framework, and that the rails (12) for the slide (13) and the guide means (36) for the drawer (37) are disposed at least with their major part within the hollow space confined by the framework.

7. Apparatus according to claims 5 or 6, characterized in that the motor (18) for the movement of the slide (13) drives a cable-or chainline (16).

8. Apparatus according to any of claims 5 to 7, characterized in that the slide (13) is guided for suspended movement on the rails (12).

9. Apparatus according to any of claims 5 to 8, characterized in that the slide (13) carries on each one of two opposing sides at least one gripper (19, 19') for operating of two baking carriages (5, 5') disposed to both sides of the framework (7).

10. Apparatus according to any of claims 1 to 9, characterized in that the support (32) is constituted by edgewisely disposed ledges (33) that preferably extend parallel to each other and to the direction of movement of the gripper (19), which ledges are spaced from each other and in the retracted condition of the drawer (37) are disposed within the framework (7).

11. Apparatus according to claim 10, characterized in that those edges (33) which are disposed at the side of the support (32) opposing the lay-down device (1) are shorter than the edges (33) disposed at the other side of the support (32).

12. Apparatus according to any of claims 1 to 11, characterized in that the support (32) is carried by two drawers (37) spaced from each other, which drawers are actuated in common by the drive means (38) via a cross piece (53) connecting the drawers.

## Revendications

1. Dispositif de transport automatique de porteurs plans (4) pour morceaux de pâte, par exemple de tôles à cuire ou de planches à fermentation, entre une installation à couvrir (1) et un chariot de boulangerie (5) et d'empilage automatique de porteurs (4) pour morceaux de pâte couvris dans le chariot de boulangerie (5), comportant un bâti (7) dans lequel au moins une griffe (19) est translatable aux niveaux des porteurs (4) pour morceaux de pâte empilés dans le chariot de boulangerie (5) au moyens d'un chariot (9) guidé verticalement au bâti (7) et est mobile en chacun de ces niveaux en direction au chariot de boulangerie (5) pour prendre un porteur (4) pour morceaux de pâte et en direction du chariot de boulangerie (5) pour transférer ce porteur (4) pour morceaux de pâte sur un support (32) translatable en hauteur ensemble avec la griffe (19), le chariot (9) portant aussi un dispositif de transport (34), qui transporte le porteur (4) pour morceaux de pâte du chariot de boulangerie (5) à l'installation à couvrir (1) et inversement, caractérisé en ce que le support (32) exempt de griffe est porté par le dispositif de transport (34) et est translatable linéairement en direction à l'installation à couvrir (1) au moyens d'une coulisse (36) portée par le chariot (9), et en ce qu'au moins une rallonge (37) à étages multiples est prévue, qui porte le support (32) pour ce mouvement de translation de va-et-viens du support (32), dont les étages individuels sont translatable relativement l'une par rapport à l'autre par un dispositif d'entraînement commun (38).

2. Dispositif selon la revendication 1, caractérisé en ce qu'une première partie de rallonge (40) est guidée de manière translatable à la coulisse (36) fixée au chariot (9), à laquelle une deuxième partie (41) est guidée de manière translatable, et en ce que les deux parties de rallonge (40,41) sont couplées par un mécanisme à mouvement dans la même direction mais à des vitesses différentes.

3. Dispositif selon la revendication 2, caractérisé en ce que la première partie de rallonge (40) porte un ruban sans fin (47) guidé sur des poulies de renvoi (48), dont le brin inférieur (49) est fixé à la coulisse (36) et dont le brin supérieur (51) est fixé à la deuxième partie de rallonge (41).

4. Dispositif selon la revendication 3, caractérisé en ce que les étages individuels (36) de la rallonge (37) sont guidé l'un à l'autre par des rails télescopiques.

5. Dispositif selon une des revendications 1 à 4, caractérisé en ce que le chariot (9) porte des rails horizontaux (12) pour le mouvement de va-et-viens provoqué par un moteur (18) d'un coulisseau (13) portant la griffe, lesdites rails (12) s'étendants normalement à la coulisse (36) fixée au-dessous au chariot (9) pour la rallonge (37).

6. Dispositif selon la revendication 5, caractérisé en ce que le chariot (9) comporte un châssis en forme de caisson, et qu'au moins la majorité des rails (12) pour le coulisseau (13) et de la coulisse (36) pour la rallonge (37) sont aménagés dans l'espace creux limité par le châssis.

7. Dispositif selon la revendication 5 ou 6, caractérisé en ce que le moteur (18) pour l'entraînement du coulisseau (13) entraîne un câble ou une chaîne de transmission (16).

8. Dispositif selon une des revendications 5 à 7, caractérisé en ce que le coulisseau (13) est guidé aux rails en étant suspendu.

9. Dispositif selon une des revendications 5 à 8, caractérisé en ce que le coulisseau (13) porte au moins une griffe (19, 19') à chacune de deux côtés opposée pour le maniement de deux chariots de boulangerie (5,5') disposés aux deux côtés du bâti (7).

10. Dispositif selon une des revendications 1 à 9, caractérisé en ce que le support (32) est formé de listeaux (33) posés sur chant, préférablement s'étendant parallèlement l'un à l'autre et à la direction de mouvement de la griffe (19), qui sont espacés l'un de l'autre et sont disposés dans le bâti (7) quand la rallonge (37) est rétractée.

11. Dispositif selon la revendication 10, caractérisé en ce que ceux listeaux (33), qui sont disposés à la côté du support (32) opposée à l'installation à couvrir (1), sont plus courts que les listeaux (33) disposés à l'autre côté du support (32).

12. Dispositif selon une des revendications 1 à 11, caractérisé en ce que le support (32) est porté de deux rallonges (37) espacés l'un de l'autre, qui sont commandés ensemble par le dispositif d'entraînement (38) au moyens d'une pale de pont (53) les reliante.
